# EUROPEAN PATENT APPLICATION

(11) **EP 0 562 825 A1**
(43) Date of publication of application: **29.09.1993**
(21) Application number: 93302205.5
(22) Date of filing: 23.03.1993
(51) Int. Cl.: H04B 5/00

(54) **Method and apparatus for radio transmission using leaky cables**

(30) Priority: 24.03.1992 GB 9206333
(71) Applicant: ROHDE & SCHWARZ SERVICES Ltd., Fleet, Hampshire GU13 8UZ (GB)
(72) Inventor: Morrow, Campbell George, c/o Rohde & Schwarz, Fleet, Hampshire GU13 8UZ (GB)
(74) Representative: Bubb, Antony John Allen

(57) **Abstract**

A radio frequency transmission system for providing communication between a base station (2) and a zone of movement extending along a predetermined track comprises a plurality of fibre optic to radio frequency converters (6) spaced at intervals along the track. Each converter (6) is individually coupled to a corresponding section of a leaky feeder (3A-3D) and each section of leaky feeder is individually terminated (4A-4D). The respective sections (3A-3D) extend end-to-end along the track in order, collectively, to serve a continuous zone of communication. The individual fibre optic to radio frequency converters (6) are each coupled via a fibre optic cable (7) to a common radio frequency to optical interface (8) located in the region of the base station (2).

## Description

This invention concerns improvements in and relating to radio frequency communications systems. More especially the invention concerns a communication system of the kind that is intended to provide communication between a base station and one or more mobile units located within a predetermined zone of movement extending along a track.

Such a system may, for example, be associated with a track extending through a tunnel, and in a known system of this kind transmission and reception of radio signals within the zone of movement defined by the tunnel is effected via a so-called 'leaky feeder' cable extending along the tunnel and coupled to a transmission and reception unit at the base station. In order to enable radio frequency signals to be radiated along the length of the cable, it is necessary for high power bi-directional signal repeating amplifiers to be connected in series along the cable. Such amplifiers must be exceptionally linear in order to minimise disturbance from third order signals generated by the non-linear characteristic of the cable. The requirement for high power bi-directional amplifiers distributed along the cable correspondingly increases the expense of the system.

It is accordingly an object of the present invention to enable disadvantages of the known system to be reduced.

In accordance with the present invention a radio frequency transmission system for providing communication between a base station and a zone of movement extending along a predetermined track comprises a plurality of fibre optic to radio frequency converters spaced at intervals along said track, each said converter being individually coupled to a corresponding section of a leaky feeder, each section of leaky feeder being individually terminated, the respective sections extending end to end along said track in order, collectively, to serve a continuous zone of communication extending along said track, and the individual fibre optic to radio frequency converters each being coupled via a fibre optic cable to a common radio frequency to optical interface located in the region of said base station.

Preferably each of said fibre optic to radio frequency converters is bi-directional converter enabling both transmission and reception to be effected via the leaky feeder connected thereto.

An arrangement in accordance with the invention has the advantage that the need for high power repeater amplifiers is eliminated, since the system need contend only with the third order product generated within each fibre optic converter and its associated section of feeder, rather than that of the multiple amplification provided in the known system.

The invention is illustrated by way of example in the accompanying drawing, in which:
Figure 1 is a diagram illustrating a known arrangement of radio frequency communication system, and
Figure 2 is a diagram illustrating a system in accordance with the present invention.

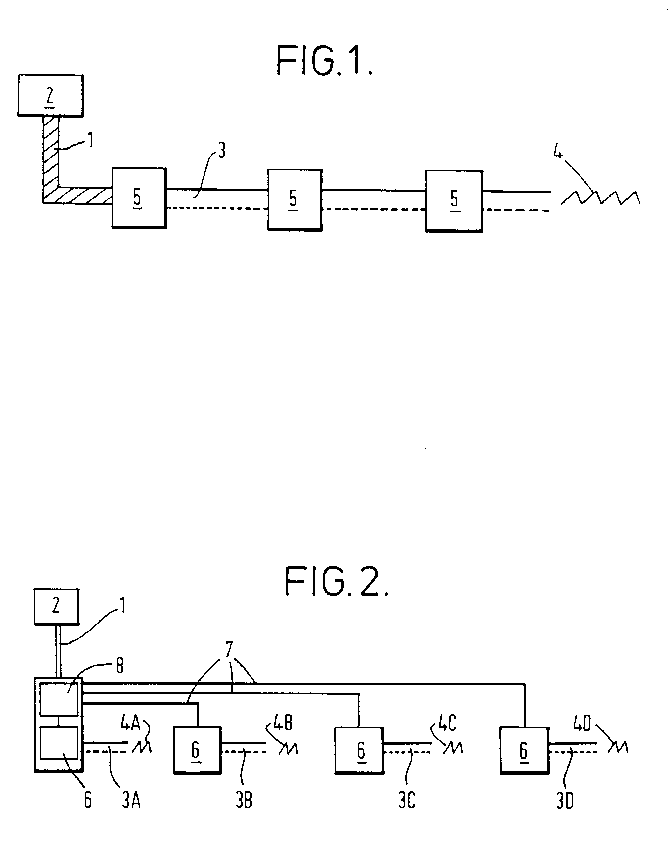

Referring to Fig. 1, a radio communication system comprises a coaxial feeder 1 coupled to a radio transceiving system 2 provided at a base station, a leaky feeder 3 extending longitudinally of a predetermined track and ending in a termination 4, and a plurality of high power bi-directional amplifiers 5 connected in series in the leaky feeder at intervals along the track.

A system as described above may, for example, be utilised to provide two-way radio communication between the base station 2 and mobile transceiver units contained in vehicles transported along said track. The track may, for example, be an underground railway extending along a tunnel, in which case the leaky feeder is a cable extending along the tunnel in proximity to the railway track.

As already mentioned, such a system has the disadvantage that the bi-directional amplifiers 5 are required to be of high power and exceptionally linear in order that effective communication can be maintained along the full length of the track. Such amplifiers are not only relatively expensive but are of relatively large size and thus difficult to locate in the confined space of an underground railway tunnel.

Fig. 2 illustrates an arrangement in accordance with the invention, wherein the leaky feeder 3 of Fig. 1 is replaced by a plurality of individual sections of feeder 3A,3B,3C,3D, each provided with an individual termination 4A,4B,4C,4D. Each section of cable is coupled to a bi-directional fibre optic radio frequency converter 6, and each such converter is individually coupled via a corresponding fibre optic cable 7 to an optical interface 8 providing coupling with the coaxial feeder 1 coupled to the base station 2.

An arrangement in accordance with the invention provides improved communication in comparison with the known system, since each converter 6 is individually fed by means of a fibre optic cable 7 so that disturbing third order signals are minimised and the quality of transmission and reception is improved, particularly towards the end of the communication zone remote from the base station 2. Moreover, such a system is particularly applicable in the conversion of a known system of the kind illustrated in Fig. 1, since it is only necessary to section the original leaky feeder installed as part of the prior system, to insert the fibre optic to RF converters 6, and then to provide individual terminations for the sections of feeder.

## Claims

1. A radio frequency transmission system for providing communication between a base station (2) and a zone of movement extending along a predetermined track, characterised in that it comprises a plurality of fibre optic to radio frequency converters (6) spaced at intervals along said track, each said converter being individually coupled to a corresponding section of a leaky feeder (3A-3D), each section of leaky feeder being individually terminated (4A-4D), the respective sections (3A-3D) extending end to end along said track in order, collectively, to serve a continuous zone of communication extending along said track, and the individual fibre optic to radio frequency converters (6) each being coupled via a fibre optic cable (7) to a common radio frequency to optical interface (8) located in the region of said base station (2).

2. A system according to Claim 1, characterised in that each of said fibre optic to radio frequency converters (6) is a bidirectional converter enabling both transmission and reception to be effected via the leaky feeder (3A-3D) connected thereto.

3. A system according to Claim 1 or 2, characterised in that said predetermined track extends along an enclosed tunnel.

4. A system according to Claim 3, characterised in that said tunnel is an underground tunnel.

5. A system according to Claim 3 or 4, characterised in that said track is a railway track.

6. A method for improving a radio frequency communication system of the kind comprising a base station providing for radio frequency transmission and/or reception and coupled to a leaky feeder cable extending along a predetermined track and terminated at a point remote from the base station, characterised in that it comprises the steps of sectioning the leaky feeder cable into a plurality of individual sections extending end-to-end along said track, coupling each said section to an individual fibre optic to radio frequency converter and providing each section with an individual termination whereby each said section is coupled to transmit and/or receive radio frequencies via said fibre optic to radio frequency converter, coupling each of said fibre optic to radio frequency converters by means of a respective fibre optic cable to a common optical to radio frequency interface located in the region of said base station, and coupling the output of said base station directly to the said common radio frequency to optical interface.
